# FASCICULE DE BREVET EUROPEEN

(11) **EP 3 524 860 B1**
(45) Date de publication et mention de la délivrance du brevet: **07.04.2021**
(21) Numéro de dépôt: 19156682.7
(22) Date de dépôt: 12.02.2019
(51) Int. Cl.: F16J 15/16, F16J 15/18, F16J 15/56, F16K 31/122, F15B 15/14

(54) **ORGANE DE PILOTAGE**
STEUERVORRICHTUNG
CONTROL MEMBER

(30) Priorité: 13.02.2018 FR 1870154
(43) Date de publication de la demande: 14.08.2019
(73) Titulaire: Technic.com, 75019 Paris (FR)
(72) Inventeur: GAILLARD, Jean-christophe, 75002 PARIS (FR)
(74) Mandataire: Demulsant, Xavier

(56) Documents cités:
- DE-U1-202008 005 469
- US-A- 1 597 254
- US-A- 3 029 061

## Description

La présente invention concerne un ensemble de pilotage comprenant un organe de pilotage, notamment destiné à contrôler l'ouverture et la fermeture de circuits hydrauliques et notamment par exemple des valves de séquences sensibles à la pression. Elle concerne plus particulièrement les organes de pilotage de faibles débits et grande sensibilité et qui, de plus, sont de faibles dimensions.

La présente invention concerne également les poussoirs hydrauliques, c'est à dire des dispositifs destinés à exercer une force de bridage d'éléments sur des outillages automatisés par exemple. Elle concerne préférentiellement des poussoirs hydrauliques de petites dimensions.

Le document US 3029061 décrit une unité de contrôle de circuit hydraulique à haute pression à l'aide d'un circuit de contrôle d'air à basse pression. On sait par ailleurs que les organes de commande qui sont destinés à gérer le fonctionnement des circuits hydrauliques et notamment des circuits hydrauliques de puissance aptes à fournir de forts débits de fluide hydraulique, doivent néanmoins être d'une grande sensibilité et être en mesure de fonctionner sous des débits hydrauliques extrêmement faibles.

Il en résulte que de tels circuits font appel à des éléments actionneurs qui sont constitués de pistons de faible diamètre qui doivent être déplacés dans des conditions de faible frottement à l'intérieur d'un alésage

Par ailleurs, on connaît de US 1,597,254 un mécanisme de ressort qui assure en permanence une précharge d'une bague d'étanchéité.

La présente invention a pour but de proposer un tel ensemble de pilotage comme défini dans la revendication 1. Cet ensemble de pilotage comprend un organe de pilotage qui est apte à constituer un poussoir hydraulique ainsi qu'un organe de pilotage notamment pour des vannes hydrauliques et des régulateurs ou des limiteurs de pression.

L'organe de pilotage comprend un corps percé d'un alésage axial dans lequel est monté mobile en translation un piston dont l'extrémité antérieure est apte à sortir du corps,
- l'alésage débouchant dans un logement de plus grand diamètre, qui comporte au niveau de l'intersection de celui-ci avec l'alésage une surface tronconique ouverte vers sa partie postérieure et inclinée par rapport à l'axe longitudinal de l'alésage d'un angle compris entre 30° et 65°,
- une bague d'étanchéité pourvue d'une face antérieure tronconique étant enfilée sur le piston de façon telle que cette face tronconique soit en appui sur la surface tronconique du logement,
- le piston possédant à son extrémité postérieure une tête,
- un ressort de compression étant disposé entre cette tête et la face postérieure de la bague d'étanchéité.

La bague d'étanchéité pourra être préférentiellement constituée d'un polymère thermoplastique ou d'un polymère fluoré chargé ou non d'un ou plusieurs additifs aptes à diminuer son coefficient de frottement, et sa dureté sera notamment comprise entre 85 et 97 shore A.

La présente invention a pour objet un ensemble de pilotage comportant un organe de pilotage tel que défini précédemment qui est caractérisé en ce qu'il comporte un logement cylindrique dans lequel est fixé le corps et qui est en communication avec un conduit d'alimentation en fluide de pilotage sous pression, la profondeur de ce logement étant telle que, lorsque la tête de piston est en contact avec le fond du logement, le ressort est dans un état comprimé.

Préférentiellement, le corps sera de forme cylindrique et comportera sur sa périphérie un filetage par lequel il sera vissé dans un filetage interne du logement.

A titre d'exemple, il sera également décrit mais pas revendiqué, un ensemble de pilotage comportant un organe de pilotage tel que défini précédemment caractérisé en ce que :
- le corps est un corps de vanne à partir d'une face antérieure de laquelle est creusé un alésage axial cylindrique se terminant par une surface tronconique orientée vers la face antérieure du corps et formant un siège de clapet, contre lequel est appliqué un élément obturateur sous l'action de moyens élastiques, cet alésage étant alimenté en fluide sous pression par un conduit,
- la sortie du siège de clapet est en communication avec l'extérieur par un conduit de sortie de fluide hydraulique,
- l'organe de pilotage est disposé dans un logement du corps de vanne qui est coaxial à l'alésage et orienté de façon telle que l'extrémité antérieure du piston soit apte à repousser et à relâcher l'élément obturateur lors de son déplacement en translation,
- la profondeur du logement est telle que lorsque la tête de piston est en contact avec le fond de ce logement, le ressort est dans un état comprimé,
- le logement est alimenté en fluide de pilotage sous pression par un conduit.

Suivant un exemple, la sortie du siège de clapet pourra être en communication avec le conduit de sortie par l'intermédiaire d'une chambre.

A titre d'exemple, il sera également décrit mais pas revendiqué, un ensemble de pilotage comportant un organe de pilotage tel que défini précédemment caractérisé en ce que :
- le corps est un corps de régulateur/limiteur de pression à partir d'une face antérieure de laquelle est creusé un alésage axial cylindrique en communication avec des moyens d'alimentation en fluide sous pression se terminant par une surface tronconique ouverte vers la partie postérieure du corps et formant un siège de clapet,
- l'organe de pilotage est disposé dans un logement du corps coaxial à l'alésage et orienté de façon telle que l'extrémité antérieure du piston soit apte à venir obturer et à libérer le siège de clapet lors de son déplacement en translation,
- le logement de l'organe de pilotage est en communication par un conduit avec le conduit d'alimentation en fluide hydraulique sous pression.

On décrira ci-après, à titre d'exemple non limitatif, des formes d'exécution de la présente invention, en référence au dessin annexé sur lequel :
- la figure 1 est une vue en coupe axiale et longitudinale d'un organe de pilotage suivant l'invention, avant sa mise en place dans un logement récepteur,
- la figure la et une vue partielle agrandie d'une partie de l'organe de pilotage représenté sur la figure 1,
- la figure 2 est une vue en coupe axiale et longitudinale de l'organe de pilotage représenté sur les figures 1 et la, après sa mise en place dans un logement récepteur, dans une application de poussoir hydraulique,
- les figures 3a et 3b sont des vues en coupe diamétrale de deux variantes de réalisation d'une bague d'étanchéité mise en œuvre dans l'organe de pilotage suivant la présente invention,
- la figure 4 est une vue en coupe axiale et longitudinale d'un second mode de mise en œuvre d'un organe de pilotage pas couvert par les revendications, dans une application de pilotage d'une vanne hydraulique,
- la figure 5 est une vue en coupe axiale et longitudinale d'un troisième mode de mise en œuvre d'un organe de pilotage pas couvert par les revendications, dans une application de pilotage d'un ensemble régulateur/limiteur de pression.

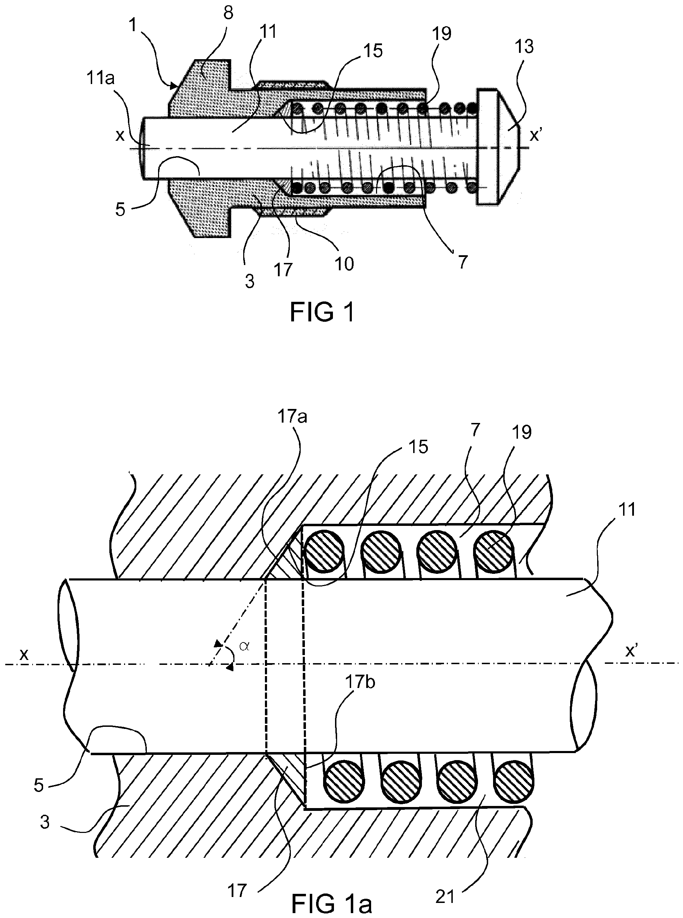

On a représenté sur la figure 1 un organe de pilotage 1 suivant l'invention, qui est constitué d'un corps cylindrique 3 qui est creusé sur toute sa longueur d'un alésage axial cylindrique 5 qui débouche dans un logement cylindrique 7 de plus grand diamètre qui est ouvert sur l'extérieur en sa partie postérieure. La partie antérieure du corps 3 est pourvue d'un épaulement 8 qui est destiné à venir en appui sur une structure support et qui est suivie d'un filetage 10 destiné à fixer l'organe de pilotage sur cette structure support, ainsi qu'expliqué ci-après.

L'alésage axial 5 reçoit un piston cylindrique 11 d'axe longitudinal xx' qui est monté à coulissement dans celui-ci et qui se termine à sa partie postérieure par une tête de piston 13.

La partie antérieure du logement 7 se termine par une surface tronconique 15 qui est inclinée par rapport à l'axe xx' de l'organe de pilotage d'un angle aigu α ouvert vers la partie postérieure de ce logement, ainsi que représenté sur les figures 1 et la. Dans le présent mode de mise en œuvre, l'angle α est égal à 45° mais, dans d'autres formes de réalisation, il peut bien entendu prendre d'autres valeurs, notamment comprises entre 30° et 65°, et ceci notamment en fonction de la valeur de la pression P du fluide, ou des pressions souhaitées sur les surfaces à étancher fixe et mobile.

Une bague d'étanchéité 17 de type dit « triangle » est montée coulissante sur le piston 11.

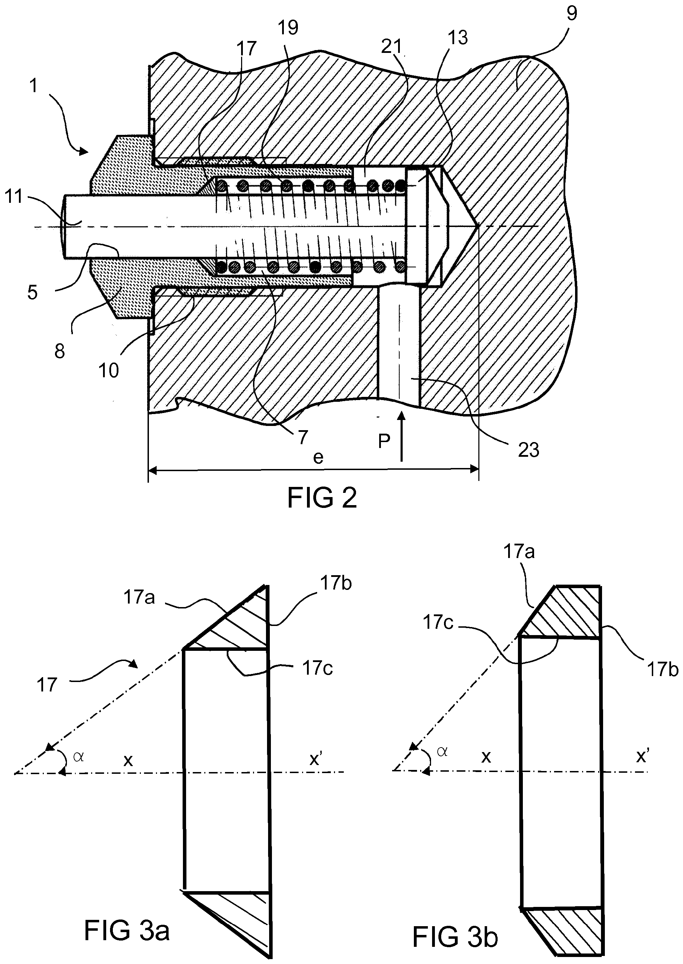

Ainsi que représenté sur les figures 3a et 3b, la section diamétrale de cette bague, dite « triangle », peut être de forme triangulaire ainsi que représenté sur la figure 3a ou trapézoïdale ainsi que représenté sur la figure 3b, et ceci en fonction des applications souhaitées. Cette bague 17, possède une face antérieure 17a également de forme tronconique dont la conicité α est préférentiellement identique à celle du fond du logement 7 et son diamètre interne est tel qu'il lui permet de s'ajuster librement sur le piston 11.

La bague 17 comporte des moyens de précharge qui, en l'absence de fluide sous pression, appliquent la face tronconique 17a de la bague 17 contre la surface tronconique 15 du logement 7.

Ces moyens de précharge sont constitués en l'espèce d'un ressort de compression 19 qui est enfilé sur le piston 11 et qui est en appui d'une part sur la face postérieure 17b de la bague 17 et sur la tête 13 du piston 11. On comprend que, dans ces conditions la force de précharge exercée par le ressort 19 sur la bague 17 est fonction d'une part de la raideur de celui-ci et d'autre part de son état de compression, qui est lui-même fonction de la position longitudinale de la tête de piston 13 par rapport à la surface tronconique 15.

Ainsi que représenté sur la figure 2, l'organe de pilotage 1 est destiné à prendre place dans un alésage borgne 21 d'une structure support 9 dont la partie antérieure comporte un filetage dans lequel son filetage 10 vient se visser de façon que son épaulement 8 soit appliqué sur la structure support 9.

On déterminera la longueur e de l'alésage borgne 21 de façon que, compte tenu de la raideur du ressort 19 ce dernier se trouve dans un état de compression en mesure d'exercer sur la face postérieure 17b de la bague 17 une force de précharge f correspondant à la précharge que l'on souhaite appliquer à la bague d'étanchéité 17.

La structure support 9 est percée d'un conduit 23 qui débouche dans la partie postérieure de l'alésage 21 et par lequel arrive un fluide hydraulique sous une pression P , dit fluide de pilotage.

On comprend que, dans ces conditions, lorsque ce dernier n'est pas admis par le conduit 23, le ressort 19, qui est comprimé, applique à la bague d'étanchéité 17 la force de précharge axiale f, si bien que la composante radiale fr de celle-ci applique la surface 17c de la bague sur la surface externe du piston 11.

Lorsque le fluide de pilotage est admis par le conduit 23 dans l'alésage 21, il repousse alors le piston 11 vers la partie antérieure de l'organe de pilotage en comprimant le ressort 19 qui, dès lors, exerce sur la bague d'étanchéité 17 une force axiale supplémentaire F dont la composante radiale Fr applique alors la surface 17c de la bague sur la surface externe du piston, assurant ainsi l'étanchéité entre ce dernier et le corps cylindrique 3.

Ensuite, lorsque l'on stoppe l'arrivée du fluide de pilotage, le ressort 19 ramène alors le piston 11 à sa position primitive en état de précharge de la bague d'étanchéité 17.

La présente invention est intéressante en ce que, dans un tel mode de mise en œuvre, le ressort 19 assure deux fonctions, à savoir, d'une part, la précharge de la bague d'étanchéité 17 et, d'autre part, le retour du piston 11 lorsque l'on stoppe l'arrivée du fluide de pilotage.

On comprend qu'un tel mode de mise en œuvre peut être avantageusement utilisé dans toutes les applications du type précédemment décrit, mais également dans des applications de vérin simple effet à gorge ouverte, et notamment dans celles où il est nécessaire de disposer d'un organe de pilotage sous une forme miniaturisée.

En effet la bague d'étanchéité 17 qui est utilisée sur cet organe de pilotage 1 permet une miniaturisation de celui-ci, dans la mesure où, en raison de sa forme en triangle et de sa nature, notamment un matériau de type polytétrafluoréthylène, elle est en mesure d'être suffisamment rigide pour être sollicitée directement par un ressort de compression et néanmoins suffisamment plastique pour se déformer et, en raison de sa forme, se serrer sur le piston pour assurer l'étanchéité au fluide hydraulique sous pression.

Dans la mesure où l'organe de pilotage suivant l'invention est un dispositif dit «en gorge ouverte» puisque le logement cylindrique 7 recevant le piston 11 et la bague d'étanchéité 17 est ouvert sur l'extérieur, il permet de recevoir des bagues d'étanchéité dont la plasticité est plus faible que celle du polytétrafluoréthylène. Dans une telle forme de mise en oeuvre, on interposera entre le ressort de compression et la bague d'étanchéité une rondelle rigide qui répartira sur la surface de la bague la force exercée par le ressort. La bague pourra ainsi être constituée de polyacétal, de plastiques techniques chargés notamment par du talc, du bisulfure de molybdène, de la fibre de verre ou de la poudre de bronze.

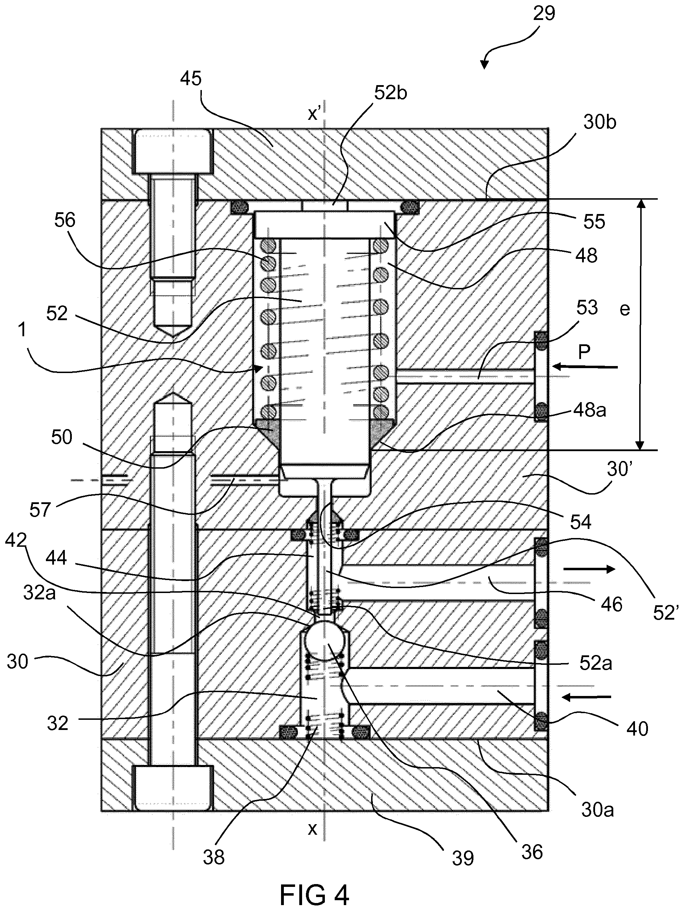

On a représenté sous forme schématique sur la figure 4 un second exemple de mise en œuvre de l'organe de pilotage non-revendiqué qui est appliqué au pilotage d'une vanne hydraulique 29.

Dans ce mode de mise en œuvre, la vanne hydraulique et l'organe de pilotage sont disposés dans un même corps en deux parties, à savoir une partie antérieure 30 et une partie postérieure 30', et sont alignés sur un axe longitudinal xx'. La vanne hydraulique comprend un alésage 32 d'axe xx' qui est réalisé à partir de la face antérieure 30a de la partie antérieure 30 du corps, et qui se termine par une surface tronconique 32a ouverte vers cette face antérieure 30a et formant un siège de clapet contre lequel une bille 36 formant clapet est appliquée par un ressort de compression 38. L'entrée de l'alésage 32 est fermée par un couvercle 39. La partie antérieure 30 du corps est percée d'un conduit 40 d'arrivée d'un fluide hydraulique sous pression dont on souhaite contrôler le passage et qui débouche dans l'alésage 32.

Ce dernier se prolonge en aval du siège de clapet 32a par un conduit 42 qui débouche dans une chambre 44 qui est en communication avec un conduit de sortie 46 du fluide sous pression.

En l'état, lorsque le liquide sous pression est admis par le conduit 40 dans l'alésage 32 il repousse conjointement au ressort 38 la bille 36 et applique cette dernière contre le siège de clapet 32a, bloquant ainsi la sortie du fluide sous pression.

Suivant cet exemple non-revendiqué, le pilotage de cette vanne, c'est-à-dire le contrôle de son ouverture et de sa fermeture, sera assuré par l'organe de pilotage.

Ce dernier est réalisé à partir de la face postérieure 30b de la partie 30' postérieure du corps et comprend un logement cylindrique 48 fermé à son extrémité postérieure par un couvercle 45 et se termine à son extrémité antérieure par une surface tronconique 48a contre laquelle vient en appui la surface tronconique 17a d'une bague d'étanchéité 50 qui est traversée par un piston 52. Ce dernier est pourvu d'une prolongation antérieure 52' de plus petit diamètre qui est montée à coulissement dans un alésage 54 qui débouche dans la chambre 44 et qui se prolonge ensuite jusqu'au siège de clapet 32a par le conduit 42 de façon à pouvoir être mis en communication avec l'alésage 32. Un conduit 57 relie la chambre 44 avec l'extérieur. Un joint triangle comprimé par un ressort assure l'étanchéité entre le corps 30' et la prolongation de clapet 52'.

Le piston 52 s'étend par son extrémité antérieure 52a jusqu'au voisinage de la bille 36 et possède à son extrémité postérieure une tête de piston 55 pourvue d'un bossage 52b. La course de ce piston 52 est telle qu'elle lui permet de repousser la bille 36 ainsi qu'expliqué ci-après. Un conduit 53 amène dans le logement 48 le fluide de pilotage de l'organe de pilotage 1.

Un ressort de compression 56 est disposé entre la face postérieure 17b de la bague 50 et la tête de piston 55. Ainsi que décrit précédemment, le ressort 56 assure à la fois une fonction de pré-compression de la bague 50 et une fonction de retrait du piston 52 lorsque la pression de pilotage est supprimée.

Lorsque l'on souhaite ouvrir la vanne hydraulique, on admet par le conduit 53 le fluide de pilotage dans le logement 48, si bien que celui-ci déplace le piston 52 à l'encontre de l'action du ressort 38 de façon qu'il repousse la bille 36 et ouvre la vanne permettant ainsi au fluide hydraulique, via la chambre 44, de sortir de la vanne hydraulique 29 par le conduit 46.

Lorsque l'on souhaite fermer cette dernière, on interrompt l'alimentation de l'organe de pilotage en fluide de pilotage et le ressort de compression 56 ramène alors le piston 52 dans sa position initiale et le fluide hydraulique alimentant la vanne 29 applique alors la bille 36 contre le siège de clapet 32a assurant ainsi la fermeture de ladite vanne.

Le présent mode de mise en œuvre de l'organe de pilotage suivant cet exemple est intéressant en ce qu'il permet, avec un fluide de pilotage de faible débit et faible pression, de commander le passage dans une vanne d'un fluide hydraulique de grand débit et forte pression.

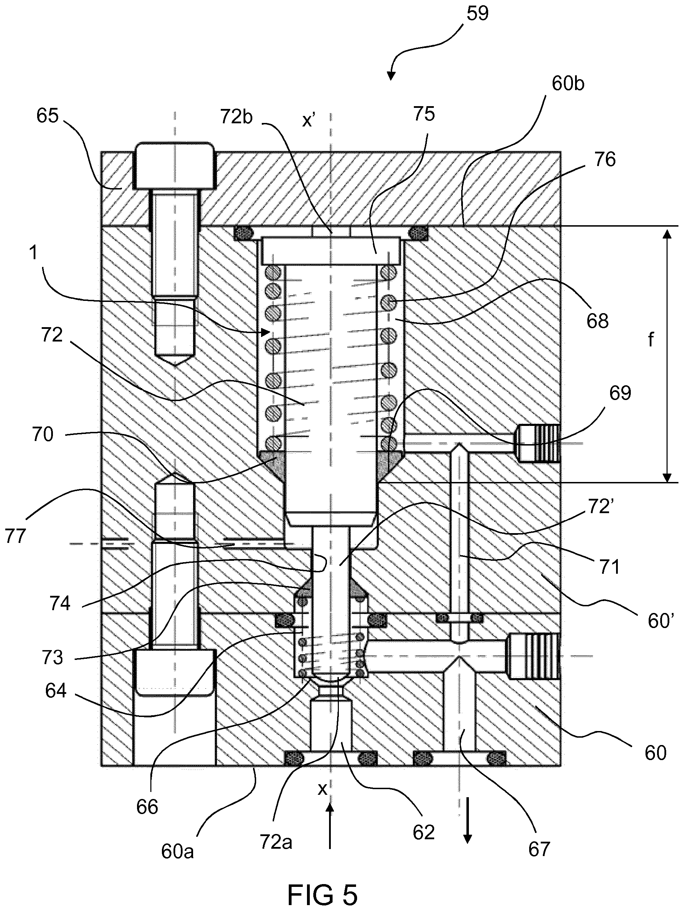

On a représenté sous forme schématique sur la figure 5 un troisième exemple de mise en œuvre de l'organe de pilotage non-revendiqué, qui est appliqué au pilotage d'un ensemble régulateur de pression 59 pouvant également être utilisé en limiteur de pression.

L'ensemble régulateur de pression 59 comprend un corps en deux parties, à savoir une partie antérieure 60 et une partie postérieure 60'. Ce corps comprend un conduit d'arrivée de fluide hydraulique 62 d'axe longitudinal xx' qui est réalisé à partir de la face antérieure 60a de la partie inférieure du corps 60, et qui débouche dans une chambre 64 dont le fond forme une surface tronconique 66 ouverte vers sa partie postérieure et qui forme un siège de clapet. La chambre 64 communique avec l'extérieur par un conduit de sortie 67 du fluide hydraulique. Ainsi le fluide hydraulique dont on souhaite réguler la pression arrive dans le régulateur 59 par le conduit 62 et en ressort par le conduit 67.

Suivant cet exemple non-revendiqué, la régulation de la pression est effectuée par un organe de pilotage 1 suivant l'invention.

Ce dernier est réalisé à partir de la face postérieure 60b du corps 60' et comprend un logement cylindrique 68 fermé par un couvercle 65 qui se termine par une surface tronconique 69 contre laquelle vient en appui la surface tronconique 17a d'une bague d'étanchéité 70 qui est traversée par le corps d'un piston 72. Ce dernier comporte une partie antérieure 72' de plus petit diamètre qui est montée à coulissement dans un alésage 74 qui débouche dans la chambre 64. Un joint d'étanchéité 73 de type triangle comprimé par un ressort assure l'étanchéité entre le corps 60 et la partie antérieure 72' du piston 72. Cette dernière se prolonge jusqu'au voisinage du siège de clapet 66 de façon à pouvoir être mise en contact avec celui-ci lors de son déplacement longitudinal.

La partie antérieure 72' du piston 72 se termine par une partie hémisphérique 72a et son extrémité postérieure se termine par une tête de piston 75 pourvue d'un bossage 72b. La course de ce piston 72 est telle qu'elle lui permet de venir en contact avec le siège de clapet 66 de façon à assurer, dans cette position, l'obturation du conduit 62. Un conduit 71 relie le conduit d'admission du fluide hydraulique 62 au logement 68 et un conduit 77 relie ce logement à l'air libre.

Un ressort de compression 76 est disposé entre la face postérieure 17b de la bague 70 et la tête de piston 75. Ce ressort est comprimé de façon d'une part à exercer sur la bague 70 un effort de précompression en mesure, par exemple, de le déformer de façon que sa surface interne cylindrique vienne en contact avec la surface externe du piston 72 et, de seconde part à un niveau de compression tel permettant de régler la valeur du niveau de la pression P régulé par l'ensemble régulateur de pression 59.

Lorsqu'un fluide hydraulique sous pression est admis par le conduit 62, celui-ci pénètre dans le logement 68, via le conduit 71, et exerce sur la tête de piston 75 une force dirigée vers la partie antérieure de l'ensemble, à J'encontre de la force de compression F_{R} du ressort 76. Tant que la pression P_{A} du fluide hydraulique admis par le conduit 62 reste inférieure à une valeur générant sur le piston une force F_{A} inférieure à la force de compression F_{R} du ressort 76, l'extrémité hémisphérique 72a de celui-ci reste éloignée du siège de clapet 66 et le fluide sous pression circule librement de son conduit d'admission 62 vers son conduit de sortie 67.

Lorsque la pression du fluide hydraulique vient à atteindre une valeur P_{A'} telle que la force F_{A'} qu'il exerce sur le piston 72 dépasse la force F_{R} générée par le ressort 76, alors le piston 72 se déplace et son extrémité hémisphérique 72a vient au contact du siège de clapet 66 obturant ainsi l'arrivée du fluide sous pression.

A l'inverse, dès que la pression P_{A} du fluide hydraulique diminue et que la force F_{A} qu'il exerce sur le piston devient inférieure à la force de compression F_{R} du ressort, ce dernier ramène le piston à sa position initiale, si bien que ce dernier libère le siège de clapet 66 permettant alors la libre circulation du fluide sous pression.

On notera que dans le présent exemple de mise en œuvre, le ressort de compression 76 assure trois fonctions, à savoir : de première part il crée une précharge de la bague d'étanchéité 70, de seconde part il règle la valeur de la pression du fluide à contrôler et, de troisième part, il ramène le piston à sa position d'ouverture de la vanne.

Suivant l'invention, la bague d'étanchéité, est préférentiellement constituée d'un matériau plastique relativement rigide, tel que notamment du polytétrafluoréthylène, du polyuréthane, un polymère thermoplastique ou un polymère fluoré chargé ou non d'un ou plusieurs additifs aptes à diminuer son coefficient de frottement.

La nature rigide du matériau utilisé pour constituer cette bague d'étanchéité 70 fait que cette dernière n'est pas sujette au phénomène d'extrusion entre le piston et l'alésage lorsque le fluide sous pression est admis, ce qui simplifie notablement la constitution de l'ensemble d'étanchéité en supprimant la nécessité de la mise en place d'une bague anti-extrusion.

On notera par ailleurs qu'en faisant varier la valeur de l'angle α on fait varier du même coup la valeur de la composante radiale Fr de la force exercée par le fluide sous pression sur le piston. On permet ainsi au concepteur de contrôler cette force d'application et ceci, notamment en fonction d'une part des applications à réaliser et, d'autre part, de la valeur de la pression P du fluide de pilotage. Ainsi, si l'on souhaite réaliser un organe de pilotage qui soit sensible à la pression du fluide sous pression, autrement dit dans lequel la pression exercée sur le piston augmente plus rapidement avec la pression du fluide, on diminuera la valeur de l'angle α et, à l'inverse, on augmentera celui-ci.

## Revendications

1. Ensemble de pilotage comprenant un organe de pilotage (1), l'organe de pilotage (1) comprenant un corps (3) percé d'un alésage axial (5) dans lequel est monté mobile en translation un piston (11) dont l'extrémité antérieure (11a) est apte à sortir du corps (3),
- l'alésage (5) débouchant dans un logement (7) de plus grand diamètre, qui comporte au niveau de l'intersection de celui-ci avec l'alésage (5), une surface tronconique (15) ouverte vers sa partie postérieure et inclinée par rapport à l'axe longitudinal (xx') de l'alésage (5) d'un angle (α) compris entre 30° et 65°,
- une bague d'étanchéité (17) pourvue d'une face antérieure (17a) tronconique étant enfilée sur le piston (11) de façon telle que cette face tronconique (17a) soit en appui sur la surface tronconique (15) du logement (7),
- le piston (11) possédant à son extrémité postérieure une tête (13),
- un ressort de compression (19) étant disposé entre cette tête (13) et la face postérieure (17b) de la bague d'étanchéité (17), l'ensemble de pilotage étant **caractérisé en ce qu'**il comporte un logement cylindrique (21) dans lequel est fixé le corps (3) et qui est en communication avec un conduit (23) d'alimentation en fluide de pilotage sous pression, la profondeur (e) de ce logement étant telle que, lorsque la tête de piston (13) est en contact avec le fond du logement (21), le ressort (19) est dans un état comprimé.

2. Ensemble de pilotage suivant la revendication 1, **caractérisé en ce que** la bague d'étanchéité (17, 50, 70) est constituée d'un polymère thermoplastique dont la dureté est comprise entre 85 et 97 shore A.

3. Ensemble de pilotage suivant la revendication 1, **caractérisé en ce que** la bague d'étanchéité (17, 50, 70) est constituée d'un polymère fluoré chargé ou non d'un ou plusieurs additifs aptes à diminuer son coefficient de frottement.

4. Ensemble de pilotage suivant la revendication 1, **caractérisé en ce que** la bague d'étanchéité (17, 50, 70) est constituée de polytétrafluorethylène, ou de polyacétal chargés ou non.

5. Ensemble de pilotage suivant la revendication 1, **caractérisé en ce que** le corps (3) est de forme cylindrique et comporte sur sa périphérie un filetage (10) par lequel il est vissé dans un filetage interne du logement (21).

## Patentansprüche

1. Steuergruppe, umfassend ein Steuerorgan (1), wobei das Steuerorgan (1) einen mit einer axialen Bohrung (5) durchbohrten Körper umfasst, in der mobil in Translation ein Kolben (11) montiert ist, dessen vorderes Ende (11a) geeignet ist, aus dem Körper (3) herauszutreten,
- wobei die Bohrung (5) in eine Aufnahme (7) mit größerem Durchmesser mündet, die an der Schnittstelle derselben mit der Bohrung (5) eine kegelstumpfartige Fläche (15) umfasst, die zu ihrem hinteren Teil offen und in Bezug auf die Längsachse (xx') der Bohrung (5) um einen zwischen 30 ° und 65 ° inbegriffenen Winkel (α) geneigt ist;
- wobei ein Dichtring (17), der mit einer kegelstumpfartigen vorderen Seite (17a) versehen ist, der derart auf den Kolben (11) aufgesteckt ist, dass diese kegelstumpfartige Seite (17a) auf der kegelstumpfartigen Fläche (15) der Aufnahme (7) zum Aufstützen kommt,
- wobei der Kolben (11) an seinem hinteren Ende einen Kopf (13) besitzt,
- wobei eine Kompressionsfeder (19) zwischen diesem Kopf (13) und der hinteren Seite (17b) des Dichtrings (17) angeordnet ist, wobei die Steuergruppe **dadurch gekennzeichnet ist, dass** sie eine zylindrische Aufnahme (21) umfasst, in der der Körper (3) befestigt ist, und die mit einer Versorgungsleitung (23) mit mit Druck beaufschlagtem Steuermedium in Verbindung ist, wobei die Tiefe (e) dieser Aufnahme derart ist, dass die Feder (19) in einem komprimierten Zustand ist, wenn der Kolbenkopf (13) mit dem Boden der Aufnahme (21) in Kontakt ist.

2. Steuergruppe gemäß Anspruch 1, **dadurch gekennzeichnet, dass** der Dichtring (17, 50, 70) aus einem thermoplastischen Polymer gebildet ist, dessen Härte zwischen 85 und 97 Shore A inbegriffen ist.

3. Steuergruppe gemäß Anspruch 1, **dadurch gekennzeichnet, dass** der Dichtring (17, 50, 70) aus einem fluorierten Polymer gebildet ist, das mit einem oder mehreren Zusatzstoff(en) durchsetzt oder nicht durchsetzt ist, das / die geeignet ist / sind, seinen Reibungskoeffizienten zu senken.

4. Steuergruppe gemäß Anspruch 1, **dadurch gekennzeichnet, dass** der Dichtring (17, 50, 70) aus Polytetrafluoräthylen oder aus durchsetztem oder nicht durchsetztem Polyacetal gebildet ist.

5. Steuergruppe gemäß Anspruch 1, **dadurch gekennzeichnet, dass** der Körper (3) eine zylindrische Form aufweist und an seinem Umfang ein Außengewinde (10) umfasst, mit dem er in ein inneres Innengewinde der Aufnahme (21) geschraubt ist.

## Claims

1. A driving assembly comprising a driving member (1), the driving member (1) comprising a body (3) drilled with an axial bore (5) in which a piston (11) is translationally movably mounted, the anterior end (11a) of which is able to come out of the body (3),
- the bore (5) opening into a larger diameter housing (7) which includes, at the intersection thereof with the bore (5), a frustroconical surface (15) open towards its posterior part and tilted relative to the longitudinal axis (xx') of the bore (5) by an angle (α) between 30° and 65°,
- a sealing ring (17) provided with a frustroconical anterior face (17a) being sleeved on the piston (11) so that this frustroconical face (17a) bears against the frustroconical surface (15) of the housing (7),
- the piston (11) having a head (13) at its posterior end,
- a compression spring (19) being disposed between this head (13) and the posterior face (17b) of the sealing ring (17),
the driving assembly being **characterised in that** it includes a cylindrical housing (21) in which the body (3) is attached and which is in communication with a pressurised driving fluid supply duct (23), the depth (e) of this housing being such that, when the piston head (13) is in contact with the bottom of the housing (21), the spring (19) is in a compressed state.

2. The driving assembly according to claim 1, **characterised in that** the sealing ring (17, 50, 70) consists of a thermoplastic polymer the hardness of which is between 85 and 97 shore A.

3. The driving assembly according to claim 1, **characterised in that** the sealing ring (17, 50, 70) consists of a fluorine polymer loaded or not with one or more additives able to decrease its friction coefficient.

4. The driving assembly according to claim 1, **characterised in that** the sealing ring (17, 50, 70) consists of loaded or non-loaded polytetrafluoroethylene, or polyacetal.

5. The driving assembly according to claim 1, **characterised in that** the body (3) has a cylindrical shape and includes, on its periphery, a thread (10) through which it is screwed in an inner thread of the housing (21).
